## Europäisches Patentamt
## European Patent Office
## Office européen des brevets

(11) Veröffentlichungsnummer: **0 036 177**
**B1**

(12) # EUROPÄISCHE PATENTSCHRIFT

(45) Veröffentlichungstag der Patentschrift:
**21.12.83**

(51) Int. Cl.³: **F 28 D 13/00**

(21) Anmeldenummer: **81101788.8**

(22) Anmeldetag: **11.03.81**

(54) **Gasfluidisierbarer Luftvorwärmer.**

(30) Priorität: **18.03.80 SE 8002101**

(43) Veröffentlichungstag der Anmeldung:
**23.09.81 Patentblatt 81/38**

(45) Bekanntmachung des Hinweises auf die Patenterteilung:
**21.12.83 Patentblatt 83/51**

(84) Benannte Vertragsstaaten:
**CH DE FR GB LI**

(56) Entgegenhaltungen:
**WO - A - 80/02193**
**CH - A - 472 647**
**DE - A - 2 746 158**
**DE - A - 2 925 649**
**GB - A - 1 386 452**
**US - A - 4 158 036**

(73) Patentinhaber: **STAL-LAVAL Apparat AB,**
**S-721 83 Västeras (SE)**

(72) Erfinder: **STENDAHL, Gunnar, Blästadsgatan 33,**
**S-582 62 Linköping (SE)**

(74) Vertreter: **Boecker, Joachim, Dr.-Ing.,**
**Rathenauplatz 2-8, D-6000 Frankfurt a.M. 1 (DE)**

BUNDESDRUCKEREI BERLIN

## Gasfluidisierbarer Luftvorwärmer

Die Erfindung betrifft einen gasfluidisierbaren Luftvorwärmer gemäß dem Oberbegriff des Anspruches 1.

Es gibt Verfahren, bei denen ein warmes staubhaltiges CO-reiches Gas anfällt, dessen Energieinhalt man durch Vorwärmen von Luft teilweise zurückgewinnen möchte, siehe z. B. die englische Patentschrift 1 386 452. Es gibt horizontale Wärmeaustauscher für den genannten Zweck, doch sind diese u. a. bei hohem Staubgehalt weniger geeignet, da hier die Gefahr einer Rohrverstopfung groß ist.

Ein Problem ist jedoch, daß CO und Luft, u. a. wegen der Explosionsgefahr und der Giftigkeit des CO, nicht gemischt we.den dürfen. Man möchte einen guten Gegenstromeffekt erzielen, um die in dem warmen Mittel enthaltene Wärme zur Luftvorwärmung ausnutzen zu können. Es ist schwer, dieses mit der Fluidisierungstechnik zu kombinieren, und man möchte die Fluidisierungstechnik benutzen, damit das dazwischenliegende, die Wärme übertragende Mittel in der Lage ist, hohe Temperaturen anzunehmen, ohne daß deshalb der Druck hoch wird.

Aus der DE-A-2 925 649 ist ein Luftvorwärmer bekannt, bei dem zwei nebeneinanderliegende Kammern vorhanden sind, in denen sich ein Wärmeübertragungsmittel aus Sand oder kornförmigem Material befindet. Unterhalb dieser Kammern verlaufen in horizontaler Richtung Rohre für die zu erwärmende Luft und Rohre für das warme gasförmige Medium. Beide Rohrarten enden etwa in der Mitte unterhalb je einer der genannten Kammern, so daß das Gas hier austritt und durch das kornförmige Material in der jeweiligen Kammer hindurchströmt und von dort über einen Auslaß abströmt. Zwischen den beiden Kammern befinden sich in der Höhe der horizontalen Rohre zwei Arten von Verbindungswegen, wobei die Rohre für die zu erwärmende Luft durch die eine Art von Verbindungswegen und die Rohre für die warme Luft durch die andere Art von Verbindungswegen führen. Durch die Ejektorwirkung an den Austrittsenden der jeweiligen Rohre wird über diese Verbindungswege das Wärmeübertragungsmittel von der einen in die andere Kammer mitgerissen, so daß über diese Verbindungswege das Wärmeübertragungsmittel sich in einem ständigen Kreislauf befindet.

Aus der DE-A-2 746 158 ist ein mehrstufiger Wirbelschichtvergaser bekannt, bei dem mehrere Kammern für ein zu vergasendes kornförmiges Gut übereinander angeordnet sind. Das kornförmige Gut wird von oben zugeführt und wandert über Überläufe von einer Kammer in die nächste. Durch sämtliche Kammern erstrecken sich in vertikaler Richtung Rohre, durch die ein heißes Gas, z. B. Helium, strömt, welches das kornförmige Gut erhitzt und vergast. Die nicht vergasbare Asche wird laufend über einen Auslaß abgeführt. Gleichzeitig wird in die das kornförmige Gut enthaltenden Kammern Prozeßdampf eingeleitet, der dieses Gut aufwirbelt und der zusammen mit dem verdampften Gut abgeführt wird. Die Wärmeübertragung erfolgt unmittelbar von dem wärmetragenden Gas auf das zu verdampfende kornförmige Gut. Ein zwischengegeschaltetes Wärmeübertragungsmittel zwischen dem heißen Gas und dem zu erwärmenden Gut ist nicht vorhanden.

Der Erfindung liegt die Aufgabe zugrunde, einen gasfluidisierbaren Luftvorwärmer der eingangs genannten Art zu entwickeln, mit dem ein hohes Maß an Wärmeübertragung erzielbar ist und der betriebssicher arbeitet.

Zur Lösung dieser Aufgabe wird ein gasfluidisierbarer Luftwärmer gemäß dem Oberbegriff des Anspruches 1 vorgeschlagen, der die im kennzeichnenden Teil des Anspruches 1 genannten Merkmale hat.

Vorteilhafte Weiterbildungen der Erfindung sind in den Unteransprüchen genannt.

Hinsichtlich der Staubmassen folgt man deren natürlicher Bewegung, die vom Schwerkraft-Gesetz bestimmt wird, und kann somit ein Verstopfen der Rohre vermeiden. Das warme CO-haltige Gas wird aufgrund des dazwischenliegenden Wärmeübertragungsmittels nicht in die luftführenden Rohre eindringen. Durch das Vorhandensein mehrerer Stufen werden die genannten Vorteile damit kombiniert, daß man in jeder Stufe begrenzte Temperaturintervalle erhält. Die Explosionsgefahr wird behoben und der Wärmeaustauscheffekt wird gut.

Anhand der in den Figuren gezeigten Ausführungsbeispiele soll die Erfindung näher erläutert werden. Es zeigen

Fig. 1a, 1b, 2, 2a und 2b das Prinzip eines gasfluidisierbaren Luftvorwärmers,

Fig. 3 einen Mehrstufenvorwärmer,

Fig. 4 ein detaillierter dargestelltes Ausführungsbeispiel eines Luftvorwärmers gemäß der Erfindung.

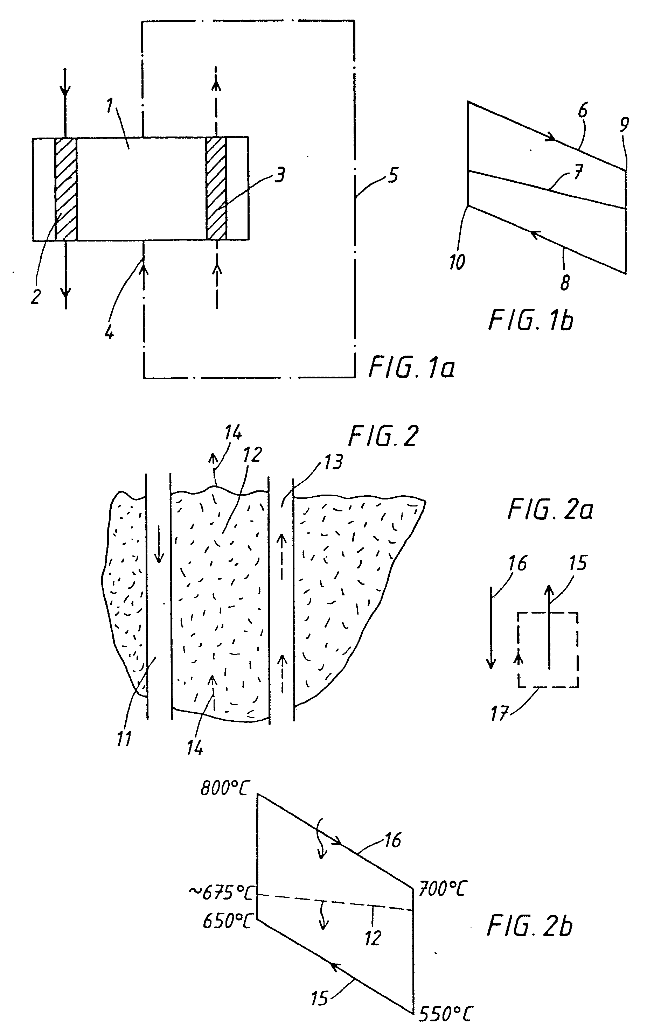

Fig. 1 zeigt ein fluidisiertes Bett 1, in dem vertikale Rohre 2, 3 gemäß der Erfindung für staubhaltiges, warmes Gas 2 bzw. Luft 3, die vorgewärmt werden soll, angeordnet sind. Fluidisierungsgas, hier $CO_2$, das in einem geschlossenen System 5 zirkuliert, wird am Boden 4 der Fluidisierungskammer eingeführt. Durch das Fluidisierungsgas werden in der Fluidisierungskammer 1 der Sand oder die Körner schwebend gehalten, wodurch dieser/diese einer hohen Temperatur standhalten können und ein Hinauslecken von Gas in die Atmosphäre verhindern.

In dem Diagramm gemäß Fig. 1b ist in vertikaler Richtung einerseits die Temperatur des warmen Gases 6, welches Wärme an den Sand 7 abgibt, und andererseits die Temperatur der Luft 8 dargestellt, die Wärme vom Sand und damit indirekt vom warmen Gas aufnimmt. Wichtig ist, daß die niedrigste Gastemperatur (Diagrammpunkt 9) größer ist als die höchste Lufttemperatur (Diagrammpunkt 10).

Fig. 2 zeigt Sand oder Granulat 12 als dazwischenliegendes, fluidisiertes Bett zwischen mehreren vertikalen Leitungen für warmes, staubhaltiges Gas 11 und vorzuwärmende Luft 13. Der Sand wird durch das Einblasen von Fluidisierungsgas (bei 14), zweckmäßigerweise inertes Gas, wie z. B. $CO_2$, $N_2$ oder Helium, das in einem geschlossenen System zirkuliert, schwebend gehalten. (Siehe die schematische Darstellung gemäß Fig. 2a mit der Luft 15, dem warmen Gas 16 und Fluidisierungsgas 17.)

In dem gezeigten Beispiel, bei dem es sich um eine Stufe in einem gasfluidisierten Luftvorwärmer handelt, beträgt die Eingangstemperatur des warmen Gases 16 800°C und seine Ausgangstemperatur 700°C. Die Eingangstemperatur der Luft 15 beträgt 550°C und ihre Ausgangstemperatur 650°C. Die Sandtemperatur beträgt ca. 675°C.

Der Wärmeaustauscher arbeitet nach dem Prinzip, daß Wärme von Gas auf den Sand und vom Sand auf die Luft übertragen wird. Der Sand dient als Zwischenmittel und verhindert einen direkten Kontakt zwischen Gas und Luft im Falle einer Undichtheit. Die Wärmeübertragung zwischen Sand und Rohroberflächen (11, 13 in Fig. 2) kann sehr hoch werden, da man feinkörmigen Sand (beispielsweise ca. 0,2 mm Korndurchmesser) verwenden kann und der Sand eine hohe Temperatur annimmt. Der $CO_2$-Strom kann der Korngröße angepaßt werden.

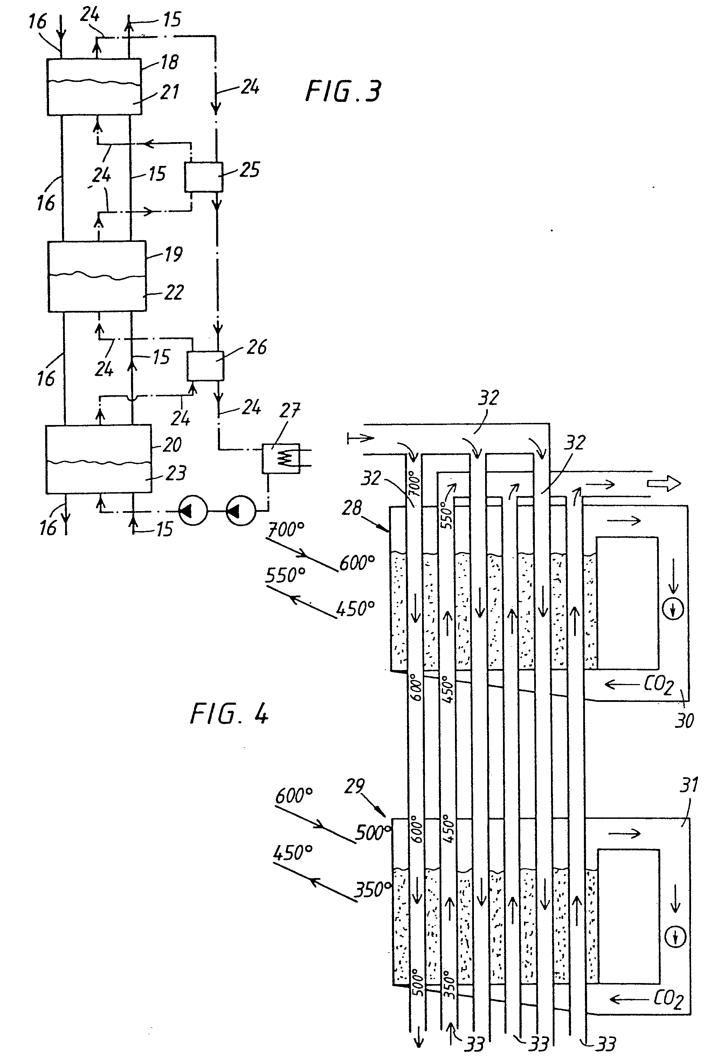

Um einen Wärmeaustausch des warmen Gases und der Luft in Gegenstrom durchführen zu können, wird der Wärmeaustauscher nach der Erfindung in Stufen (Sektionen) aufgeteilt, wie es Fig. 3 zeigt. In dem Ausführungsbeispiel sind drei Stufen vorhanden. Warmes, staubhaltiges Gas 16 und Luft 15 werden in separaten, vertikalen Rohrsystemen durch alle Stufen 18, 19, 20 geleitet, von denen jede einen gasfludisierten Luftvorwärmer enthält, von denen jede Sand, Körner oder Granulat 21, 22 bzw. 23 enthält und von denen jede durch beispielsweise $CO_2$-Gas fludiert wird. Der Druckabfall in diesen Stufen wird nicht besonders groß. Das zur Fluidisierung benutzte $CO_2$-Gas (oder $N_2$) wird in der Weise durch die drei Stufen (siehe 24) geleitet, daß $CO_2$-Gas, welches die drei Stufen passiert hat und dabei eine Temperatur von beispielsweise 675°C angenommen hat, in Wärmeaustauschern 25, 26 im Gegenstrom Wärme an nach oben strömendes $CO_2$-Gas abgibt. Das nach unten strömende $CO_2$-Gas hat nach dem Passieren des Wärmeaustauschers 25 beispielsweise eine Temperatur von 600°C und nach dem Passieren des Wärmeaustauschers 26 eine Temperatur von 525°C. Es passiert anschließend einen Wasserkühler, in dem Wasser erhitzt und das Gas auf ca. 300°C abgekühlt wird. Das Gas ist danach so weit abgekühlt, daß es Gebläse von Standardqualität passieren kann.

Die Eingangstemperatur des warmen staubhaltigen Gases in die erste Stufe 18 beträgt 800°C, die Ausgangstemperatur 700°C, und die entsprechenden Temperaturen für die Stufe 19 bzw. Stufe 20 betragen 700−600°C bzw. 600−500°C. Dies ist auch links in Fig. 4 veranschaulicht, wo zwei Stufen 28, 29 gezeigt sind. $CO_2$-Gas wird in geschlossenen Systemen 30, 31 durch die sandgefüllten Fluidisierungskammern geleitet, und die vertikalen Rohre für warmes Gas 32 bzw. Luft 33 sind abwechselnd benachbart angeordnet; sie greifen also quasi ineinander, wodurch man einen guten Wärmeaustausch erhält. Durch den Sand usw. wird das CO des warmen Gases daran gehindert, in die Luftleitungen zu gelangen. Es versteht sich, daß die Verteilung und gegenseitige Anordnung der vertikalen Rohre untereinander in seitlicher Richtung oder nach unten hin auch anders beschaffen sein kann, als in Fig. 4 gezeigt.

## Patentansprüche

1. Gasfluidisierbarer Luftvorwärmer mit ersten Rohren (16) für ein warmes gasförmiges Mittel (2) und zweiten Rohren (15) für vorzuwärmende Luft (3) sowie mit einem zwischen den Rohren angeordneten Wärmeübertragungsmittel, das aus Sand oder einem anderen kornförmigen oder granulierten Material besteht, dadurch gekennzeichnet, daß der Luftvorwärmer in mehrere kammerförmige Stufen (18−20) aufgeteilt ist, daß die ersten und zweiten Rohre (15, 16) im wesentlichen vertikal und in seitlicher Richtung voneinander getrennt durch die Stufen verlaufen und daß das Wärmeübertragungsmittel (21, 22, 23) in jeder Stufe vorgesehen und von einem zirkulierenden inerten gasförmigen Mittel (24), beispielsweise Kohlenstoffdioxyd oder Stickstoff, fluidisierbar ist.

2. Luftvorwärmer nach Anspruch 1, dadurch gekennzeichnet, daß die von der zu erwärmenden Luft jeweils später durchströmte Stufe (18) mit einer höheren Temperatur des warmen gasförmigen Mittels arbeitet als die jeweils vorhergehende Stufe (19, 20).

3. Luftvorwärmer nach Anspruch 1 oder 2, dadurch gekennzeichnet, daß die Rohre (32), die warmes gasförmiges Mittel leiten, in jeder Stufe abwechselnd benachbart mit den luftführenden Rohren (33) angeordnet sind und daß das fluidisierbare Wärmeübertragungsmittel (12, 21−23) um diese Rohre und zwischen denselben angeordnet ist.

## Claims

1. Gas-fluidizes air preheater with first tubes (16) for a warm gaseous medium (2) and second tubes (15) for air (3) to be preheated, and with a heat transmission medium arranged between said tubes, which heat transmission medium consists of sand or another particulate or granular material, characterized in that the air preheater is divided into several chamber- formed stages (18 – 20), that the first and second tubes (15, 16) are passing through the stages substantially vertically and in a laterally spaced-apart relationship to each other, and that said heat transmission medium (21, 22, 23) is provided in each stage and is fluidizable by a circulating inert gaseous medium (24), for examble carbon dioxide or nitrogen.

2. Air preheater according to claim 1, characterized in that each stage (18) that is passed by the air to be heated later than the preceding stage operates with a higher temperature of the warm gaseous medium than said preceding stage (19, 20).

3. Air preheater according to claim 1 or 2, characterized in that the tubes (32) conducting the warm gaseous medium are arranged alternately adjacent to air conducting tubes (33) in each stage, and that the fluidizable heat transmission medium (12, 21 – 33) is arranged arround and between said tubes.

**Revendications**

1. Réchauffeur d'air pouvant être fluidisé par du gaz comprenant de premiers tubes (16) pour un agent gazeux (2) chaud et de seconds tubes (15) pour de l'air à réchauffer (3), ainsi qu'un agent de transfert de la chaleur, qui est interposé entre les tubes et qui est constitué de sable ou d'un autre matériau en grains ou en granulés, caractérisé en ce que le réchauffeur d'air est divisé en plusieurs étages en forme de chambre (18 à 20), en ce que les premiers et seconds tubes (15, 16) sont sensiblement verticaux et traversent les étages en étant séparés les uns des autres suivant la direction latérale et en ce que l'agent de transfert de la chaleur (21, 22, 23) est prévu dans chaque étage et peut être fluidisé par un agent gazeux (24) inerte, en circulation, par exemple du gaz carbonique ou de l'azote gazeux.

2. Réchauffeur d'air suivant la revendication 1, caractérisé en ce que l'étage (18) traversé ultérieurement par l'air à réchauffer fonctionne à une température plus élevée de l'agent gazeux chaud que l'étage précédent (19, 20).

3. Réchauffeur d'air suivant la revendication 1 ou 2, caractérisé en ce que les tubes (32) qui conduisent l'agent gazeux chaud sont disposés à chaque étage en étant voisind, de manière alternée, des tubes (33) conduisant l'air, et en ce que l'agent de transfert de la chaleur (12, 21 à 23) est disposé autour de ces tubes et entre ceux-ci.

FIG. 1a

FIG. 1b

FIG. 2

FIG. 2a

FIG. 2b

FIG.3

FIG.4